Europäisches Patentamt

European Patent Office

Office européen des brevets

(19)

(11) Numéro de publication : **0 150 524**
**B1**

(12) **FASCICULE DE BREVET EUROPÉEN**

(45) Date de publication du fascicule du brevet :
**20.01.88**

(21) Numéro de dépôt : **84201631.3**

(22) Date de dépôt : **12.11.84**

(51) Int. Cl.⁴ : **H 04 M   1/53**

(54) Dispositif pour effectuer une ouverture de boucle d'une durée calibrée à partir d'un poste téléphonique.

(30) Priorité : **14.11.83 FR 8318029**

(43) Date de publication de la demande :
**07.08.85 Bulletin 85/32**

(45) Mention de la délivrance du brevet :
**20.01.88 Bulletin 88/03**

(84) Etats contractants désignés :
**DE FR GB SE**

(56) Documents cités :
**FR-A- 2 471 704**
**US-A- 4 306 119**

(73) Titulaire : **RTC-COMPELEC**
**130, Avenue Ledru-Rollin**
**F-75011 Paris (FR)**
**FR**
**N.V. Philips' Gloeilampenfabrieken**
**Groenewoudseweg 1**
**NL-5621 BA Eindhoven (NL)**
**DE GB SE**

(72) Inventeur : **Coulmance, Jean-Pierre**
**SOCIETE CIVILE SPID 209, rue de l'Université**
**F-75007 - Paris (FR)**

(74) Mandataire : **Pinchon, Pierre et al**
**Société Civile S.P.I.D. 209 rue de l'Université**
**F-75007 Paris (FR)**

## Description

La présente invention concerne un dispositif destiné à provoquer, à partir d'un poste téléphonique, une ouverture de boucle d'une durée calibrée en réponse à l'actionnement d'une touche spécialisée dudit poste qui met en service une liaison de commande essentiellement capacitive, dispositif comportant, entre autres, un pont de diodes assurant une polarité fixe aux portions terminales des fils de ligne qui sont en aval du crochet, au moins un circuit de transmission et de numérotation, un monostable d'impulsion d'ouverture de boucle comprenant au moins un premier transistor de type bipolaire qui commande un second transistor, normalement conducteur, dont le trajet principal de courant est monté en série avec l'un au moins des circuits de transmission et de numérotation, en bout des portions terminales des fils de ligne pour la fermeture normale de boucle, la durée de l'ouverture de boucle étant déterminée par la constante de temps résultant d'une résistance de temporisation, en série avec un condensateur de temporisation chargé sous une tension définie par une diode Zener alors que la fin de l'ouverture de boucle est définie par une tension de fin de charge inférieure à la tension précitée.

Un tel dispositif est connu de la demande de brevet français FR-A-2 471 704.

On sait que les nouveaux autocommutateurs électroniques vont offrir aux abonnés du téléphone des services supplémentaires tels que l'indication d'un appel en instance, la conférence à trois personnes, le renvoi temporaire, etc... Pour pouvoir accéder à ces services, il est nécessaire de pouvoir revenir de la phase de communication à la phase de numérotation, opération qui est commandée à partir du poste téléphonique de l'abonné et nécessite l'envoi d'un signal spécifique sur la ligne. Ce signal consiste en une ouverture de boucle d'une durée spécifiée entre certaines limites, par exemple : 270 ms, plus ou moins 50 ms.

Il y a lieu de noter qu'un certain nombre d'exigences complémentaires doivent également être satisfaites lors du fonctionnement du dispositif recherché de sorte que les solutions techniques utilisables ne sont pas aussi simples que ce à quoi on pourrait s'attendre à première vue.

Il est nécessaire, en effet, que la durée de l'impulsion reste dans les limites prescrites quelle que soit la manière avec laquelle la touche en question ait été actionnée. D'autre part, pendant la durée de l'ouverture de boucle, le courant de fuite résiduel sur la ligne doit être très faible, soit par exemple inférieur à 200 µA, et ceci même si la tension d'alimentation de ligne est portée au voisinage de 100 V (cas des lignes dites « suralimentées »). Enfin, en dehors de la période d'ouverture de boucle, le dispositif ne doit pas consommer une énergie appréciable et ne perturber en aucune manière le fonctionnement du poste, que ce soit pendant la phase de communication ou pendant la phase de numérotation. En particulier, il est nécessaire que, pendant la phase de communication, l'impédance caractéristique sous laquelle la ligne se voit chargée soit respectée, et également qu'au début de la phase de numérotation, lors de la mise sous tension des circuits en aval du crochet, le dispositif n'introduise aucun délai supplémentaire pour le passage du courant de ligne normalisé après que le combiné ait été décroché.

Le dispositif connu par la demande de brevet français N° 2 471 704 ne satisfait pas à toutes ces exigences et notamment il présente l'inconvénient de pouvoir provoquer une impulsion de durée anormalement élevée dans le cas de manœuvres successives et rapides de la touche.

De plus, le dispositif connu introduit un retard de mise en service des circuits du poste à partir de la mise sous tension et présente également l'inconvénient de déclencher l'ouverture de boucle seulement lorsque la touche est relâchée et non pas dès son enfoncement.

L'invention a pour but notamment de remédier à ces inconvénients. En effet, selon la présente invention, un dispositif tel que défini en préambule est remarquable en ce que le second transistor est du type à effet de champ MOS à la grille duquel est connectée ladite liaison de commande essentiellement capacitive, en ce que les premier et second transistors sont montés en couplage croisé, d'une part directement entre collecteur du premier transistor et grille du second transistor, et d'autre part par une liaison comprenant le condensateur de temporisation, entre drain du second transistor et base du premier transistor, et en ce que ladite tension de fin de charge est limitée par une autre diode Zener, dite de limite de fin de charge.

Le dispositif selon l'invention présente de nombreux avantages. En premier lieu, le deuxième transistor par sa nature permet, lorsqu'il est conducteur, d'offrir une impédance très faible devant celle du circuit de transmission et de numérotation de sorte qu'il n'en perturbe pas le fonctionnement. Sa commande par la grille peut être réalisée à haute impédance de sorte que la consommation d'énergie sur la ligne est négligeable pour assurer cette commande et que l'introduction du dispositif au sein du poste téléphonique ne modifie pas de manière sensible l'impédance vue par la ligne, ni pour la composante continue, ni pour les signaux transmis.

En second lieu, le premier transistor ayant pour rôle essentiel de commander, pendant la durée de l'ouverture de boucle, le passage en régime de non conduction du second transistor peut, également pour les mêmes raisons, être alimenté à partir de la ligne, sous impédance élevée et donc ne consommer que très peu de courant pendant l'ouverture de boucle. Par ailleurs, le dispositif fonctionnant avec des résistances de valeur élevée, le condensateur de temporisation, dont la valeur détermine en combinaison avec l'une de ces résistances la durée de l'ouverture de boucle, est alors de capacité peu élevée, ce qui est avantageux du point de vue de la qualité et du prix de ce condensateur. Par ailleurs, le simple échange du condensateur de temporisation par un condensateur ayant une autre valeur modifie de manière parfaitement prévisible la durée de l'ouverture de boucle. Enfin, la durée d'ouverture de boucle provoquée par le dispositif selon l'invention est exactement définie et reproductible par la présence de la diode Zener dite de limite de fin de charge. Le dispositif selon l'invention peut donc être construit et mis en service sans aucun réglage particulier tenant aux conditions spécifiques d'exploitation du poste téléphonique dans lequel ce dispositif est incorporé. Si les durées d'ouverture de boucle spécifiées devaient varier d'un secteur géographique à l'autre, en raison de différences propres aux autocommutateurs, il suffirait d'insérer un condensateur de temporisation de la valeur adéquate au sein du dispositif pour qu'il satisfasse aux exigences locales.

Dans un premier mode de mise en œuvre de l'invention, la diode Zener dite de limite de fin de charge est disposée en parallèle avec la diode Zener de définition de la tension de charge entre les portions terminales des fils de ligne, et comporte au moins une résistance de limitation de courant, de valeur élevée, en série.

Dans un deuxième mode de mise en œuvre, la diode Zener dite de limite de fin de charge est disposée entre les portions terminales des fils de ligne selon un branchement série incluant la diode Zener de définition de la tension de charge, ainsi qu'au moins une résistance de limitation de courant de valeur élevée.

Si le premier mode de mise en œuvre requiert l'utilisation de deux diodes Zener ayant des tensions de régulation différentes, par exemple 12 et 24 volts, avec le deuxième mode de mise en oeuvre, on peut choisir au contraire d'utiliser deux diodes Zener de même valeur, la tension provoquant la charge du condensateur de temporisation étant alors le double de la tension de fin de charge de ce même condensateur.

Par une légère modification de la structure du dispositif tel que défini jusqu'ici, on peut obtenir qu'une fonction supplémentaire concernant la protection contre les surtensions soit assurée par le dispositif de l'invention.

En effet, un mode avantageux de mise en oeuvre de l'invention se caractérise par le fait qu'entre l'émetteur du premier transistor et la source du second transistor est insérée, dans la portion terminale du fil de ligne correspondant, une résistance de mesure de courant dont la valeur est choisie telle que d'une part, dans les conditions normales de fonctionnement, la chute de tension développée sur cette résistance par le courant traversant le circuit de transmission et de numérotation, chute de tension qui est transmise au moins partiellement aux bornes du trajet base-émetteur du premier transistor, soit insuffisante pour débloquer ce transistor alors que, d'autre part, en cas de surintensité dépassant une valeur limite prédéterminée, le premier transistor devienne conducteur et provoque alors une ouverture calibrée de boucle sur la ligne, éventuellement suivie d'autres cycles d'ouverture si la surintensité persiste. Le dispositif assure ainsi une protection contre un excès de courant pouvant endommager par échauffement excessif le circuit de transmission et de numérotation.

Selon une variante complémentaire de ce mode de mise en oeuvre, le dispositif se caractérise en outre par le fait qu'une diode Zener dite de protection est disposée entre les portions terminales des fils de ligne, en série avec une résistance limitatrice d'une part, et avec le trajet base-émetteur du premier transistor d'autre part, cette diode Zener de protection ayant une tension de fonctionnement supérieure à la tension de charge du condensateur de temporisation, de sorte qu'en cas d'une surtension de ligne dépassant une tension limite de sécurité le premier transistor entre en conduction et provoque une ouverture de boucle d'une durée au moins égale à celle de la surtension. Une protection complémentaire est donc assurée selon cette variante, qui prend en compte la valeur de la tension aux bornes des portions terminales de ligne et évite notamment que la puissance dissipée par le second transistor ne dépasse une valeur déterminée lors d'une surtension accidentelle survenant sur la ligne.

La description qui va suivre au regard des dessins annexés fera bien comprendre comment l'invention peut être réalisée.

La figure 1 représente un schéma électrique d'un exemple de dispositif selon l'invention dans un premier mode de réalisation.

La figure 2 montre un schéma électrique de dispositif selon un deuxième mode de réalisation, variante du précédent.

La figure 3 représente le schéma électrique d'un autre exemple de réalisation de l'invention dans lequel le dispositif assure en outre des fonctions de protection contre les surtensions.

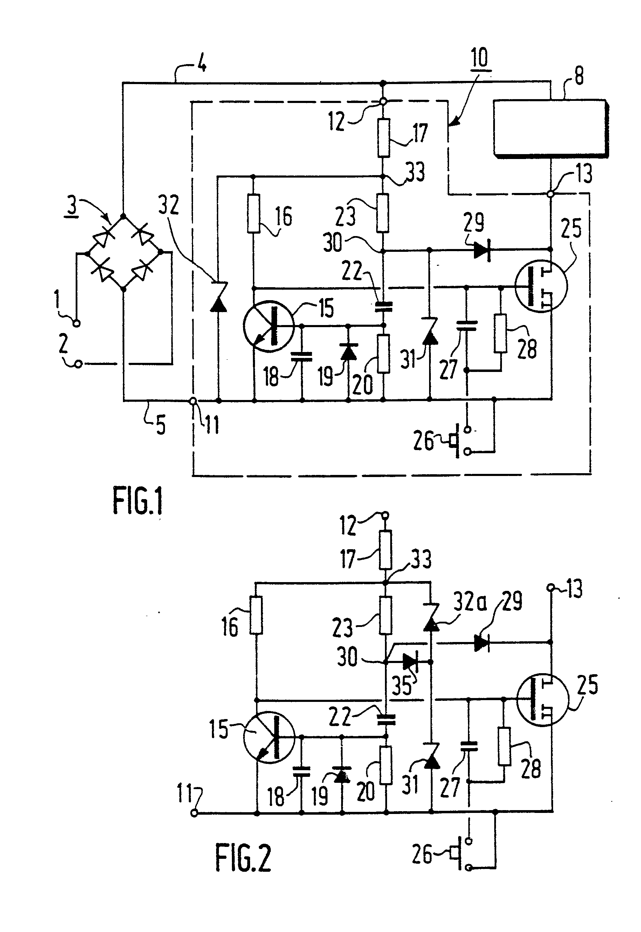

A la figure 1, on a représenté des bornes 1 et 2 connectables aux fils d'une ligne téléphonique par l'intermédiaire d'un double interrupteur dit « crochet » (non représenté sur la figure). Le schéma de la figure concerne donc les dispositifs et circuits d'un poste téléphonique qui sont associés aux portions terminales des fils de ligne, en aval du crochet. Les bornes 1 et 2 sont reliées à un pont de diodes 3 qui assure une polarité fixe aux portions terminales 4 et 5 des fils de ligne. Dans l'exemple de la figure, la portion terminale 4 se trouve polarisée, en fonctionnement, positivement par rapport à la portion terminale 5 prise comme potentiel de référence. Un circuit de transmission et de numérotation 8, qui se présente par exemple sous forme intégrée selon une technique connue par ailleurs, est connecté par sa borne positive à la portion terminale 4. Un dispositif pour provoquer une ouverture de boucle de durée calibrée est représenté entouré par un cadre en tirets et désigné dans son ensemble par le repère 10. Une première borne 11 de ce dispositif est reliée à la portion terminale 5, une deuxième borne 12 reliée à la portion terminale 4, et une troisième borne 13 reliée à la borne négative du circuit de transmission et de numérotation 8.

Le dispositif 10 comporte un premier transistor 15, de type bipolaire, ici un transistor NPN dont l'émetteur est relié à la borne 11, dont le collecteur est relié à la borne 12 par l'intermédiaire de deux résistances montées en série, la résistance 16 qui sert de charge collecteur, et la résistance 17. La base du premier transistor est reliée, d'une part à la portion terminale de ligne servant de référence, via un branchement parallèle d'un condensateur 18, d'une diode 19 et d'une résistance 20, et d'autre part à la borne 12 via un branchement série comportant successivement : un condensateur de temporisation 22, une résistance de temporisation 23 et la résistance 17, cette dernière étant donc commune à la branche de polarisation du collecteur et à la branche de polarisation de la base du premier transistor 15. Ce transistor sert d'élément de commande pour un second transistor 25, de type à effet de champ MOS, ici un transistor à canal N choisi de telle sorte que son trajet source-drain soit nettement conducteur pour une tension grille-source de quelques volts (3 volts par exemple), et soit non conducteur lorsque cette tension est égale (ou inférieure) à zéro volt. La source du second transistor est connectée à la portion terminale de ligne servant de référence et reliée à la borne 11, tandis que le drain est relié à la portion terminale 4 via la borne 13 et à travers le circuit de transmission et de numérotation 8. Le trajet source-drain du second transistor 25 est donc monté en série avec le circuit 8 en bout des portions terminales 4 et 5 des fils de ligne. La grille de ce second transistor reçoit la commande d'ouverture calibrée de boucle à partir d'une touche interrupteur 26 entraînant, lors de son enfoncement, une mise au potentiel de référence de cette grille grâce à une liaison essentiellement capacitive qui comporte le montage en parallèle d'un condensateur 27 et d'une résistance 28.

Les premier et second transistors 15 et 25 sont montés de sorte qu'ils constituent une bascule monostable par un couplage croisé, d'une part directement entre collecteur du premier transistor 15 et grille du second transistor 25, et d'autre part par une liaison entre drain du second transistor et base du premier transistor qui inclut le condensateur de temporisation 22. Cette liaison est matérialisée par une diode 29 dont la cathode est connectée au drain du second transistor 25 et l'anode connectée au noeud 30 de la branche de polarisation de base du premier transistor 15, noeud 30 situé entre le condensateur de temporisation 22 et la résistance de temporisation 23. Enfin, le dispositif 10 est complété par une première diode Zener 31 dite de limite de fin de charge branchée entre le noeud 30 et la portion terminale de référence reliée à la borne 11, et par une deuxième diode Zener 32 dite de définition de tension de charge dont la tension est supérieure à celle de la première diode Zener, branchée entre le noeud 33 et la portion terminale de référence, le nœud 33 étant celui qui relie entre elles les résistances 17 et 23.

Le fonctionnement du dispositif représenté à la figure 1 est le suivant : dès la mise sous tension des portions terminales de ligne 4 et 5, lorsque le combiné du poste est décroché, une tension positive apparaît sur la grille du second transistor 25 qui passe sans délai appréciable à l'état conducteur. Cette tension de polarisation grille est fournie à partir de la borne 12 via les résistances 17 et 16. Le potentiel du nœud 30, par rapport au potentiel de référence de la borne 11, qui est initialement égal à zéro (le condensateur 22 étant déchargé avant la mise sous tension de la ligne) ne s'élève que de la valeur d'une chute de tension directe de la diode 29. En effet, le second transistor 25 étant conducteur et le circuit 8 se comportant sensiblement comme une diode Zener, le potentiel de drain est très voisin du potentiel de référence. La polarisation de grille du transistor 25 est, en définitive, déterminée par la fraction de la tension de ligne en boucle fermée sur le circuit 8, formée par le pont diviseur constitué des résistances 17 et 23, et augmentée de la chute de tension de la diode 29. Il est aisé de prévoir un rapport convenable entre les valeurs de ces résistances de sorte que cette polarisation de grille corresponde à un état de conduction du second transistor pour lequel la résistance de conduction ($R_{ON}$) soit suffisamment faible, par exemple inférieure à une dizaine d'ohms pour une polarisation grille-source de l'ordre de 3 volts.

Lors de la mise sous tension, le premier transistor 15 ne peut passer en conduction grâce à l'action du condensateur 18, préalablement déchargé par la résistance 20.

Par pression sur la touche interrupteur 26, on provoque une ouverture de boucle sur la ligne téléphonique. En effet, le condensateur 27 étant préalablement déchargé par la résistance 28 montée en parallèle, force la polarisation de grille du transistor 25 à un potentiel nul par rapport à la référence, au moins pendant un court instant qui est suffisant pour que ce transistor cesse de conduire. Le circuit de transmission et de numérotation 8 est déconnecté de la ligne puisque l'impédance entre les bornes 13 et 11 devient très élevée. La diode 29, alors polarisée en inverse, s'oppose à ce qu'un courant circule à partir de la borne 13 en dehors du transistor 25. La ligne étant ouverte, ses portions terminales sont portées à la tension d'alimentation de ligne, tension qui peut être différente selon les cas, mais dépasse toujours 40 volts. Cette tension présentée en valeur positive à la borne 12 est abaissée à une valeur déterminée, 24 volts par exemple, par l'effet de la résistance 17 et de la deuxième diode Zener 32 de sorte que la tension présentée par le nœud 33 se fixe à cette valeur de 24 volts pendant toute la durée de l'ouverture de boucle. Le condensateur de temporisation 22 se charge à travers la résistance de temporisation 23. La résistance 20 est choisie de valeur suffisamment élevée pour que l'essentiel du courant de charge du condensateur de temporisation 22 circule dans la jonction base-émetteur du premier transistor. Celui-ci passe en saturation et confirme la commande à tension nulle de la grille du second transistor 25. La tension de charge du condensateur de temporisation croît de manière très sensiblement exponentielle et atteint, après une durée aisée à déterminer, la tension de régulation de la première diode Zener 31, tension qui peut être prévue à 12 volts par exemple.

A cet instant, le courant de base du premier transistor 15 s'annule et l'élévation de la tension de son collecteur détermine le retour en conduction du second transistor 25. Ce mécanisme est accéléré dès que la tension de drain du second transistor s'abaisse assez pour débloquer la diode 29 et contribue à décharger le condensateur 22.

Pendant cette phase, on évite que la base du premier transistor 15 ne soit portée à une tension inverse relativement élevée au moyen de la diode 19 qui est disposée dans un sens tel qu'elle se trouve en polarisation directe durant cette phase rapide de retour aux conditions de boucle fermée pour la ligne.

Il est à noter que le retour aux conditions de boucle fermée se trouve légèrement influencé selon que la pression sur la touche 26 de commande est très brève ou prolongée. En effet, dans le cas d'une pression qui dépasse la durée de temporisation, la commande de la grille du second transistor se trouve retardée par la charge du condensateur 27 à travers la résistance 16. Il est cependant très aisé, par le choix des valeurs de ces éléments, de faire en sorte qu'en toutes circonstances la durée d'ouverture de boucle reste à l'intérieur des tolérances imposées, le retard éventuel de la commande de grille du second transistor pouvant être prévu assez petit par rapport à la durée de la temporisation proprement dite, c'est-à-dire celle qui est déterminée par le retour en non conduction du premier transistor 15.

Bien entendu, on aura choisi une résistance 28 de valeur suffisamment élevée, devant la résistance 16, pour que le maintien de la pression sur la touche 26 au-delà du délai de temporisation ne puisse s'opposer à la commande de grille du second transistor par une tension positive à l'issue de la temporisation.

Un avantage essentiel du dispositif décrit, dans lequel le second transistor est du type à grille isolée MOS, réside dans l'utilisation possible de résistances 16, 17, 23 de très fortes valeurs, de l'ordre de grandeur de 1 MΩ ou plus. L'impédance vue par la ligne entre les bornes 12 et 11 reste donc élevée en toutes circonstances et, en particulier, durant le cycle d'ouverture de boucle. La valeur du condensateur de temporisation 22 est très aisée à déterminer en relation avec la résistance de temporisation 23 puisque ces deux éléments déterminent, pour l'essentiel, la durée de l'ouverture de boucle obtenue par le dispositif compte tenu du rapport choisi entre les tensions des première et deuxième diodes Zener 31 et 32.

En pratique, la valeur du condensateur de temporisation 22 peut rester inférieure à 1μF pour des durées de temporisation ne dépassant pas 0,5 seconde de sorte que ce condensateur peut être choisi de bonne qualité pour un prix modéré.

On se reporte maintenant à la figure 2 qui présente le schéma d'une variante du dispositif 10 de la figure 1. Sur la figure 2, les éléments ayant les mêmes fonctions sont affectés des mêmes repères numériques qu'à la figure 1. A la différence du dispositif représenté à la figure 1 dans lequel les première et deuxième diodes Zener 31 et 32 sont disposées en parallèle entre les portions terminales des fils de ligne compte tenu de la résistance 17 en série avec ces diodes et de la résistance 23 également en série en ce qui concerne la première diode 31, le dispositif de la figure 2 se distingue en ce que la première diode Zener 31 et la deuxième diode Zener 32a sont disposées entre les portions terminales des fils de ligne (bornes 11 et 12) selon un branchement série qui inclut la résistance de limitation de courant 17. La tension du noeud 33 est donc définie par la somme des tensions de régulation des diodes Zener 31 et 32a. On est libre alors de choisir, si on le désire, des diodes de caractéristiques semblables pour les diodes Zener 31 et 32a, ce qui présente quelques avantages notamment au point de vue de la stabilité du rapport des tensions obtenues en fonction de la température, aux noeuds 30 et 33. On notera sur la figure 2 la présence d'une diode 35 interposée entre le noeud 30 et le point commun des deux diodes Zener 31 et 32a, qui a pour rôle de s'opposer à la charge du condensateur de temporisation 22 par la deuxième diode Zener 32a lors du cycle d'ouverture de boucle.

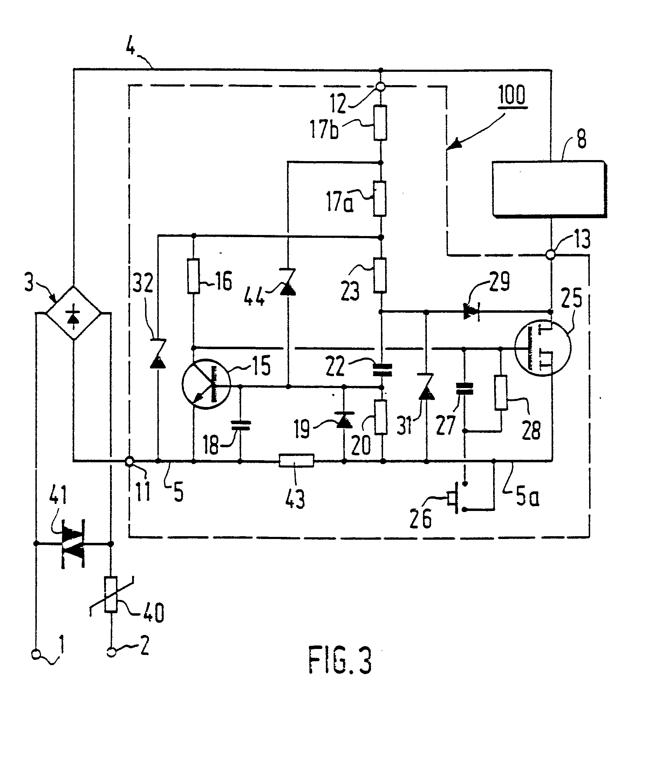

Le schéma de la figure 3 est relatif à un autre mode de mise en oeuvre de l'invention dans lequel, par de légères modifications des dispositifs déjà décrits, on peut obtenir une fonction supplémentaire de protection contre les surcharges du poste téléphonique provenant de surtensions accidentelles sur la ligne. Plus précisément, le schéma de la figure 3 reprend pour l'essentiel les éléments et dispositions du circuit de la figure 1, et les éléments communs y sont désignés par les mêmes repères numériques. On a fait figurer entre les bornes de connexion sur la ligne, 1 et 2, et le pont de diodes 3, une résistance non linéaire 40 à coefficient de température positif, en série dans l'un des fils de ligne, et un dispositif écrêteur de tension 41, en parallèle sur la ligne. Ces deux éléments 40 et 41 assurent une protection primaire des circuits du poste téléphonique selon une technique connue. Le dispositif d'ouverture de boucle 100 de la figure 3 est inséré au sein du poste téléphonique de la même manière que le dispositif 10 de la figure 1, à partir de ses bornes 11, 12 et 13. Selon le schéma de la figure 3, la portion terminale 5 de fil de ligne, qui sert de référence de potentiel, est interrompue entre l'émetteur du premier transistor 15 et la source du second transistor 25, et une résistance 43 de valeur relativement faible y est insérée. Plus précisément, l'emplacement de la résistance 43 a été choisi de telle sorte que la deuxième diode Zener 32, l'émetteur du premier transistor 15 et le condensateur 18 restent reliés directement à la borne 11. Au contraire, les liaisons de retour au potentiel de référence de la diode 19, de la résistance 20, de la première diode Zener 31, de la touche interrupteur 26 et du drain du second transistor 25 traversent la résistance 43 pour atteindre la borne 11. Ces liaisons de retour forment un tronçon 5a séparé de la portion terminale de ligne 5. La chute de tension aux bornes de la résistance 43 permet une mesure du courant traversant le circuit de transmission et de numérotation 8 puisque ce courant est de plusieurs ordres de grandeur supérieur aux autres courants circulant dans le tronçon 5a. Cette chute de tension est reportée aux bornes du trajet base-émetteur du premier transistor 15, d'une part de manière quasi instantanée via la diode 19, et d'autre part d'une manière retardée via la résistance 20 de valeur relativement élevée, et la charge du condensateur 18. La valeur de la résistance 43 est choisie telle que, dans des conditions normales de fonctionnement, la chute de tension développée à ses bornes soit insuffisante pour débloquer le premier transistor 15. Dans le cas d'une anomalie sur la ligne, conduisant à la circulation d'un courant excessif dans le circuit de temporisation et de numérotation 8, le transistor 15 est débloqué et commande une ouverture de boucle mettant ainsi le circuit 8 à l'abri d'une destruction par excès de courant. Si, à l'issue du cycle d'ouverture ainsi déclenché, l'anomalie a cessé, le poste reprend ses conditions normales de fonctionnement. Si, au contraire, l'anomalie persiste, dès le retour en boucle fermée suivant la première ouverture, un second cycle d'ouverture est aussitôt déclenché suivi par d'autres cycles successifs tant que les conditions de surintensité n'ont pas cessé. Le circuit de transmission et de numérotation 8 et le second transistor 25 ne sont traversés par un courant excédant la limite fixée que pendant de courtes impulsions séparées de la durée normale du cycle d'ouverture de boucle, c'est-à-dire selon un taux de récurrence faible qui protège le circuit 8 ainsi que le transistor 25. Cette fonction de protection ainsi obtenue intervient en complément de la protection primaire évoquée à propos des éléments 40 et 41, ces derniers étant prévus pour s'opposer à l'introduction de surcharges électriques de puissance élevée dans le poste téléphonique, mais laissant subsister des conditions de fonctionnement entraînant des risques de détérioration des circuits du poste.

A la protection contre des surintensités dont les moyens viennent d'être décrits, peut être avantageusement combinée, si on le désire, une protection supplémentaire basée sur la détection des surtensions de ligne qui auraient pu ne pas être bloquées par le système de protection primaire. Une telle protection supplémentaire est également introduite dans le dispositif 100 de la figure 3. Elle consiste à partager en deux résistances 17a et 17b, disposées en série, l'impédance limitant le courant de la deuxième diode Zener 32 et à brancher une troisième diode Zener 44 entre le point commun des résistances 17a et 17b et la base du premier transistor 15. Cette diode Zener 44 est choisie pour présenter une tension de régulation supérieure à la tension de charge du condensateur de temporisation 22. Cette tension est en rapport linéaire avec le niveau de tension considéré comme limite de sécurité compte tenu du rapport de réduction de tension formé par les résistances 17a et 17b formant pont diviseur. Lorsqu'une surtension apparaît aux bornes des portions terminales 4 et 5 de la ligne, et que cette surtension dépasse la limite de sécurité fixée, la troisième diode Zener 44 fournit un courant à la base du premier transistor 15, lequel provoque la non-conduction du second transistor 25, état qui est susceptible de se maintenir au-delà d'une période normale de temporisation tant que dure la surtension. La combinaison des protections complémentaires contre les surintensités par la résistance 43, et contre les surtensions par la diode Zener 44, limite la puissance appliquée au circuit de transmission et de numérotation 8 ainsi qu'au second transistor 25 dans toutes les circonstances de surcharge électrique de la ligne.

Il est clair que le dispositif 100 de la figure 3, qui comporte une disposition des diodes Zener 31 et 32 du type parallèle conforme à l'exemple de la figure 1, pourrait également être réalisé avec la disposition de type série de ces diodes, telle que décrite à la figure 2. ·

D'autres modifications ou variantes par rapport aux exemples décrits, tenant notamment à l'inversion des polarités des diodes et transistors du dispositif que le spécialiste peut aisément imaginer, demeurent néanmoins dans le cadre de l'invention revendiquée ci-après.

**Revendications**

1. Dispositif pour provoquer, à partir d'un poste téléphonique, une ouverture de boucle d'une durée calibrée en réponse à l'actionnement d'une touche spécialisée dudit poste qui met en service une liaison de commande essentiellement capacitive, dispositif comportant, entre autres, un pont de diodes assurant une polarité fixe aux portions terminales des fils de ligne qui sont en aval du crochet, au moins un circuit de transmission et de numérotation, un monostable d'impulsion d'ouverture de boucle comprenant au moins un premier transistor de type bipolaire qui commande un second transistor, normalement conducteur, dont le trajet principal de courant est monté en série avec l'un au moins des circuits de transmission et de numérotation, en bout des portions terminales des fils de ligne pour la fermeture normale de boucle, la durée de l'ouverture de boucle étant déterminée par la constante de temps résultant d'une résistance de temporisation, en série avec un condensateur de temporisation chargé sous une tension définie par une diode Zener dite de définition de tension de charge alors que la fin de l'ouverture de boucle est définie par une tension de fin de charge inférieure à la tension précitée, caractérisé en ce que le second transistor est du type à effet de champ MOS à la grille duquel est connectée ladite liaison de commande essentiellement capacitive, en ce que les premier et second transistors sont montés en couplage croisé, d'une part directement entre collecteur du premier transistor et grille du second transistor, et d'autre part par une liaison comprenant le condensateur de temporisation, entre drain du second transistor et base du premier transistor, et en ce que ladite tension de fin de charge est limitée par une autre diode Zener, dite de limite de fin de charge.

2. Dispositif selon la revendication 1 caractérisé en ce que la diode Zener dite de limite de fin de charge est disposée en parallèle avec la diode Zener de définition de la tension de charge entre les portions terminales des fils de ligne, et comporte, au moins une résistance de limitation de courant, de valeur élevée, en série.

3. Dispositif selon la revendication 1, caractérisé en ce que la diode Zener dite de limite de fin de charge est disposée entre les portions terminales des fils de ligne selon un branchement série incluant la diode Zener de définition de la tension de charge, ainsi qu'au moins une résistance de limitation de courant de valeur élevée.

4. Dispositif selon l'une quelconque des revendications 1 à 3, caractérisé en ce qu'entre l'émetteur du premier transistor et la source du second transistor est insérée, dans la portion terminale du fil de ligne correspondant, une résistance de mesure de courant dont la valeur est choisie telle que d'une part, dans les conditions normales de fonctionnement, la chute de tension développée sur cette résistance par le courant traversant le circuit de transmission et de numérotation, chute de tension qui est transmise au moins partiellement aux bornes du trajet base-émetteur du premier transistor, soit insuffisante pour débloquer ce transistor alors que d'autre part, en cas de surintensité dépassant une valeur limite prédéterminée, le premier transistor devienne conducteur et provoque alors une ouverture calibrée de boucle sur la ligne, éventuellement suivie d'autres cycles d'ouverture si la surintensité persiste.

5. Dispositif selon la revendication 4, caractérisé en ce qu'une diode Zener, dite de protection, est disposée entre les portions terminales des fils de ligne, en série avec une résistance limitatrice d'une part, et avec le trajet base-émetteur du premier transistor d'autre part, cette diode Zener de protection ayant une tension de fonctionnement supérieure à la tension de charge du condensateur de temporisation, de sorte qu'en cas d'une surtension de ligne dépassant une tension limite de sécurité, le premier transistor entre en conduction et provoque une ouverture de boucle d'une durée au moins égale à celle de la surtension.

## Claims

1. An arrangement for causing, from a telephone set, an opening of the subscriber loop for a well-defined time interval in response to the actuation of a special key of said set which renders a predominantly capacitive control link operative, this arrangement comprising inter alia a diode bridge which ensures a fixed polarity of the end portions of the line wires downstream of the hook, at least one transmission and dialling circuit, a monostable pulse circuit for opening the loop, comprising at least a first transistor of the bipolar type which controls a second transistor, which is normally conductive and whose main current path is arranged in series with at least one of the transmission and dialling circuits, provided at the end of the end portions of the line wires for normal closure of the loop, the time interval during which the loop is open being determined by the time constant produced by a timing resistor arranged in series with a timing capacitor which is charged to a voltage defined by a Zener diode, whilst the end of the loop opening interval is defined by an end-of-charging voltage which is less than the above-mentioned voltage, characterized in that the second transistor is of the MOS field-effect type to the grid of which said predominantly capacitive control link is connected, that the first and second transistors are arranged cross-wise, on the one hand directly between the collector of the first transistor and the grid of the second transistor, and on the other hand via a connection comprising the timing capacitor, between the drain of the second transistor and the base of the first transistor, and that said end-of-charging voltage is limited by a further Zener diode, the so-called end-of-charging limit.

2. An arrangement as claimed in Claim 1, characterized in that the said end-of-charging Zener diode is arranged in parallel with the Zener diode which defines the charging voltage between the end portions of the line wires, and comprises at least one series-arranged current limiting resistor of a high value.

3. An arrangement as claimed in Claim 1, characterized in that the said end-of-charging Zener diode is arranged between the end portions of the line wires in accordance with a series network including the Zener diode which defines the charging voltage, as well as at least one current limiting resistor of a high value.

4. An arrangement as claimed in any one of the Claims 1-3, characterized in that inserted between the emitter of the first transistor and the source of the second transistor, in the end portion of the corresponding line wire, there is a current measuring resistor whose value is chosen such that on the one hand, in normal operating conditions, the voltage drop produced across this resistor by the current flowing through the transmission and dialling circuit, which voltage drop is transmitted at least partially to the terminals of the base-emitter path of the first transistor, is insufficient to render this transistor conductive,

whereas on the other hand, in the case of an overvoltage exceeding a predetermined limit value, the first transistor becomes conductive and then causes a well-defined loop opening on the line, possibly followed by further opening cycles if the overvoltage persists.

5. An arrangement as claimed in Claim 4, characterized in that so-called protective Zener diode is arranged between the end portions of the line wires, in series with a limiting resistor on the one hand, and with the base-emitter path of the first transistor on the other hand, this protective Zener diode having an operating voltage which is superior to the charging voltage of the timing capacitor, so that in the case of overvoltage on the line exceeding a safety limit voltage, the first transistor becomes conductive and causes the loop to open for a duration which is at least equal to the duration of the overvoltage.

**Patentansprüche**

1. Anordnung für eine zeitlich definierte Schleifenöffnung durch eine Fernsprechteilnehmerstelle, hervorgerufen durch Betätigung einer Spezialtaste der genannten Teilnehmerstelle, wodurch eine vorwiegend kapazitive Steuerverbindung in Betrieb gesetzt wird, wobei diese Anordnung ausserdem eine Diodenbrücke aufweist, wodurch eine feste Polarität für die Endteile der Leitungsdrähte stromabwärts der Gabel gewährleistet wird, weiterhin mindestens eine Übertragungs- und Wählschaltung, einen monostabilen Multivibrator für Impulse zum Öffnen der Schleife, der mindestens einen ersten Transistor vom bipolaren Typ aufweist, der einen zweiten Transistor steuert, der normalerweise leitend ist und dessen Hauptstromstrecke mit mindestens einer der Übertragungs- und Wählschaltungen in Reihe geschaltet ist, die am Ende der Endteile der Leitungsdrähte vorgesehen sind zum üblichen Schliessen der Schleife, wobei die Dauer des geöffneten Zustandes der Schleife durch die Zeitkonstante bestimmt wird, die durch einen Verzögerungswiderstand hervorgerufen wird, der mit einem Verzögerungskondensator in Reihe liegt, der unter eine Spannung aufgeladen wird, die durch eine dazu vorgesehene Zener-Diode bestimmt wird, während das Ende der Schleifenöffnung durch eine Ladungsendspannung bestimmt wird, die niedriger ist als die obengenannte Spannung, dadurch gekennzeichnet, dass der zweite Transistor vom Feldeffekt-MOS-Typ ist, mit dessen Gate-Elektrode die gennannte hauptsächlich kapazitive Steuerverbindung verbunden ist und dass der erste und zweite Transistor kreuzgekoppelt sind, einerseits unmittelbar zwischen dem Kollektor des ersten Transistors und dem Gate des zweiten Transistors und andererseits mittels einer Verbindung mit dem Verzögerungskondensator zwischen der Drain des zweiten Transistors und der Basis des ersten Transistors und dass die genannte Ladungsendspannung durch eine andere dazu vorgesehene Zener-Diode begrenzt wird.

2. Anordnung nach Anspruch 1, dadurch gekennzeichnet, dass die genannte Ladungsendbegrenzungs-Zener-Diode zwischen den Endteilen der Leitungsdrähte parallel zu der Ladungsspannungsbestimmungs-Zener-Diode angeordnet ist und mindestens einen reihengeschalteten Strombegrenzungswiderstand hohen Wertes aufweist.

3. Anordnung nach Anspruch 1, dadurch gekennzeichnet, dass die genannte Ladungsendbegrenzungs-Zener-Diode zwischen den Endteilen der Leitungsdrähte als Reihenschaltung mit der Ladungsspannungsbestimmungs-Zener-Diode sowie mit mindestens einem Strombegrenzungswiderstand hohen Wertes vorgesehen ist.

4. Anordnung nach einem der vorstehenden Ansprüche 1 bis 3, dadurch gekennzeichnet, dass zwischen dem Emitter des ersten Transistors und der Source des zweiten Transistors in dem Endteil des entsprechenden Leitungsdrahtes ein Strommesswiderstand vorgesehen ist, dessen Wert derart gewählt worden ist, dass einerseits unter normalen Betriebsverhältnissen der an diesem Widerstand durch den durch die Übertragungs- und Wählschaltung hindurchgehenden-Strom erzeugte Spannungsabfall, der mindestens teilweise den Klemmen der Basis-Emitterstrecke des ersten Transistors zugeführt wird, nicht ausreicht um diesen Transistor zu sperren, während andererseits im Falle einer einen vorbestimmten Grenzwert überschreitenden Überspannung der erste Transistor nach wie vor leitend ist und dadurch eine definierte Schleifenöffnung der Leitung hervorruft, gegebenenfalls mit weiteren nachfolgenden Öffnungszyklen, wenn die Überspannung andauert.

5. Anordnung nach Anspruch 4, dadurch gekennzeichnet, dass eine sogenannte Schutz-Zener-Diode zwischen den Endteilen der Leitungsdrähte vorgesehen ist und zwar in Reihe mit einerseits einem Begrenzungswiderstand und andererseits der Basis-Emitterstrecke des ersten Transistors, wobei diese Schutz-Zener-Diode eine Betriebsspannung hat, die höher ist als die Ladungsspannung des Verzögerungskondensators, so dass im Falle einer Überspannung der Leitung, die eine Sicherheitsgrenspannung überschreitet, der erste Transistor leitend wird und eine Öffnung der Schleife hervorruft, die eine Dauer hat, die der dieser Überspannung mindestens entspricht.

**FIG.1**

**FIG.2**

FIG.3